(19) Europäisches Patentamt
European Patent Office
Office européen des brevets

(11) Publication number: **0 273 012 B1**

# (12) EUROPEAN PATENT SPECIFICATION

(45) Date of publication of patent specification: **15.04.92**

(51) Int. Cl.[5]: **C09J 133/00**, B42D 15/10

(21) Application number: **87810765.5**

(22) Date of filing: **18.12.87**

## (54) Method of bonding.

(30) Priority: **23.12.86 GB 8630761**

(43) Date of publication of application:
**29.06.88 Bulletin 88/26**

(45) Publication of the grant of the patent:
**15.04.92 Bulletin 92/16**

(84) Designated Contracting States:
**BE CH DE FR GB IT LI NL SE**

(56) References cited:
**DE-A- 2 401 996**
**FR-A- 2 241 598**
**FR-A- 2 316 307**

(73) Proprietor: **CIBA-GEIGY AG**
**Klybeckstrasse 141**
**CH-4002 Basel(CH)**

(72) Inventor: **Irving, Edward, Dr.**
**41, Swaffham Road**
**Burwell Cambridge CB5 0AN(GB)**
Inventor: **Smith, Terence James**
**6A, Dickasons**
**Melbourn Royston Hertfordshire SG8 6EL(GB)**

(74) Representative: **Sharman, Thomas et al**
**c/o CIBA-GEIGY PLC Patents Department**
**Tenax Road Trafford Park**
**Manchester M17 1WT(GB)**

**EP 0 273 012 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of bonding together two surfaces, at least one of which is gelatinous in nature. The method is Particularly useful in bonding holograms to security devices such as identity cards or credit cards and to security paper such as banknotes and passport paper.

Holograms having a gelatinous image-bearing layer are bonded to articles to give them a distinctive appearance or, in the case of security articles, to authenticate the articles. In order to serve its purpose in a security application, a hologram should be destroyed if any attempt is made to remove it from the article to which it is bonded. The bonding of gelatinous surfaces, such as are found in holograms, presents a difficult technical problem. In conventional methods of producing a security device incorporating a hologram, the gelatinous surface of the hologram is bonded to another component of the device using a hot melt adhesive.

German Patent DE-A2401996 describes the production of an identity card by hot-cementing an image on to a substrate and UV polymerisation of an acrylate top layer.

These conventional methods have not proved satisfactory in as much as holograms bonded to security devices by hot melt adhesives can be removed after moderate heating without destroying the hologram or the security device. There is, consequently, a need for a method of bonding a gelatinous surface, such as a surface of a holographic film, to another surface of the same or different nature, so that the resulting assembly cannot be taken apart without destroying the hologram.

French Patent FR-A2241598 describes an anaerobic adhesive composition for bonding metals, comprising an anaerobic mixture containing a polyvalent metal salt of a compound of the formula

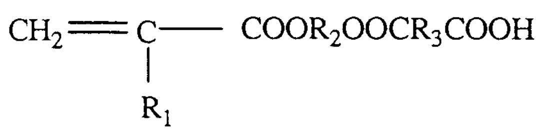

wherein $R_1$ is hydrogen or methyl, $R_2$ is an aliphatic, alicyclic or aromatic polyhydric alcohol residue and $R_3$ is an aliphatic, alicyclic or aromatic polybasic carboxylic acid residue, and incorporated therein small amounts of an organic peroxide as a curing catalyst, tetrahydroquinoline as a curing accelerator and stabiliser and benzosulphimide as a promotor. The bonding of substances other than metals is not mentioned.

French Patent FR-A2316307 describes an anaerobic adhesive composition comprising a polymerisable acrylic ester, a peroxide polymerisation initiator therefor and 3 to 25% of an acrylic ester acid of the formulae

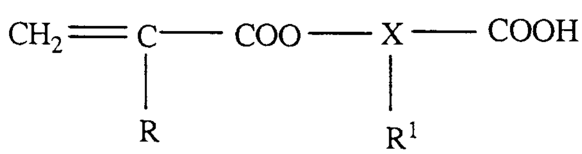

where R is hydrogen or methyl $R^1$ is hydrogen, halogen, carboxyl, cyano or lower alkyl and X is a divalent $C_1$-$C_6$ hydrocarbon group. All the compositions specifically disclosed contain a polyester urethane compound.

These adhesives are used for bonding metals, although they are said to be useful for bonding glass or plastics in which case it is advantageous to treat these materials with metallic salt accelerators. There is no mention of bonding gelatinous surfaces.

Accordingly, the present invention provides a method of bonding together two surfaces, at least one of which is gelatinous, comprising

(i) sandwiching between, and in contact with, the surfaces an adhesive composition comprising a polymerisable carboxylic acid having at least one polymerisable acrylic group, and

(ii) subjecting the adhesive composition to polymerising conditions therefor until it is polymerised.

The present invention also provides a composite article comprising two components, at least one of

which has a gelatinous surface, bonded together by the method of the invention. Thus, such a composite article comprises two components, at least one of which has a gelatinous surface, said gelatinous surface being bonded to a surface of the other component by a polymerised adhesive comprising a polymer of a carboxylic acid having at least one polymerisable arcylic group.

Carboxylic acids having a polymerisable acrylic group suitable for use in the method of the invention include reaction products of polycarboxylic acid anhydrides, such as succinic, glutaric, maleic, phthalic or trimellitic anhydride, with compounds having a hydroxyl group and at least one polymerisable acrylic group. Such hydroxyl compounds may be esters of acrylic or methacrylic acid with a monoepoxide such as an alkylene oxide (when the esters are hydroxyalkyl (meth)acrylates) or a monoglycidyl ether, e.g. iso-octyl glycidyl ether or phenyl glycidyl ether or an epoxide resin such as diglycidyl ether of a dihydric alcohol or a bisphenol or a polyglycidyl ether of a phenolic novolac resin. Other suitable polymerisable carboxylic acids are reaction products of glycidyl acrylate, glycidyl methacrylate, acryloyl chloride or methacryloyl chloride and secondary hydroxyl group-containing carboxyl-terminated adducts of an epoxide resin such as a diglycidyl ether of a dihydric alcohol or of a bisphenol with a dicarboxylic acid such as succinic, glutaric, adipic, maleic, hexahydrophthalic or phthalic acid.

Preferred polymerisable carboxylic acids are monoacrylic compounds having from 3 to 30 carbon atoms. Such monoacrylic compounds include acrylic acid, methacrylic acid, a dimer or other oligomer of acrylic or methacrylic acid and reaction products of a hydroxyalkyl acrylate or a hydroxyalkyl methacrylate, such as 2-hydroxyethyl methacrylate or 2-hydroxypropyl acrylate, with a polycarboxylic acid anhydride such as succinic, glutaric, maleic, hexahydrophthalic, phthalic or trimellitic anhydride. Preferred such monoacrylic compounds are those of formula

$CH_2 = C(R^1)\text{-}COOR^2$ I

where

$R^1$ denotes a hydrogen atom or a methyl group,

$R^2$ denotes a hydrogen atom or a group of formula $-R^3\text{-}COOH$ and

$R^3$ denotes an alkylene group of 1 to 4 carbon atoms or a group of formula

$-(CH_2\text{-}CH(R^1)COO)_nCH_2(R^1)-$ II

where n denotes an integer from 1 to 6.

The polymerisable carboxylic acids are either commercially available or may be prepared by conventional reactions. For example, acids of formula I where $R^2$ denotes $-R^3\text{-}COOH$ and $R^3$ denotes a group of formula II can be prepared by oligomerisation of acrylic or methacrylic acid.

Especially preferred polymerisable carboxylic acids of formula I are those where $R^1$ denotes a hydrogen atom and $R^2$ denotes a hydrogen atom or a group of formula $-CH_2CH_2COOH$, or where $R^1$ denotes a methyl group and $R^2$ denotes a hydrogen atom or a group of formula $-CH_2CH(CH_3)COOH$, that is acrylic acid, 2-carboxyethyl acrylate, methacrylic acid and 2-carboxy-2-methylethyl methacrylate. 2-carboxyethyl acrylate is commercially available as a product prepared by dimerisation of acrylic acid, containing 90% by weight of 2-carboxyethyl acrylate and 10% by weight of higher oligomers.

Other preferred polymerisable carboxylic acids are compounds having 2 acrylic groups and 1 or 2 carboxyl groups, these compounds generally having from 14 to 70 carbon atoms. Preferred diacrylic monocarboxylic acids are those of formula

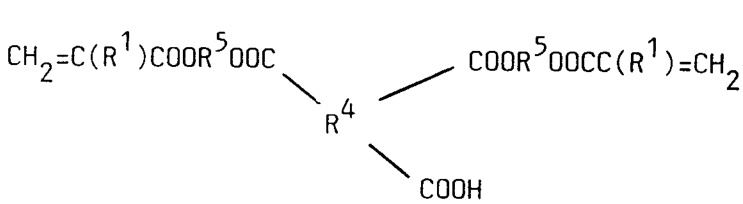

III

where

$R^1$ denotes a hydrogen atom or a methyl group,

$R^4$ denotes a trivalent organic residue of a tricarboxylic acid after removal of three carboxyl groups,

generally of 3 to 30 carbon atoms, preferably a cycloaliphatic or aromatic residue of 5 to 20 carbon atoms, and

$R^5$ denotes an alkylene group of 1 to 10 carbon atoms, preferably 1 to 4 carbon atoms.

The diacrylic monocarboyxlic acids are usually reaction products of an acyl halide of a tricarboxylic acid monoanhydride, e.g. of formula

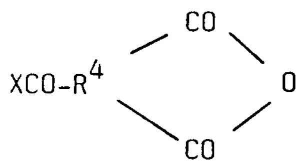

IV

with a hydroxyalkyl acrylate or methacrylate, e.g. of formula

$CH_2 = C(R^1)COOR^5OH$ V

where $R^1$, $R^4$ and $R^5$ are as defined in formula III and X denotes a halogen atom, preferably a chlorine atom.

Suitable acyl halides of tricarboxylic acid monoanhydrides from which such reaction products may be derived include acyl halides of monoanhydrides of cycloaliphatic tricarboxylic acids such as cyclopentane 1,2,4-tricarboxylic acid and cyclohexane 1,2,4-tricarboxylic acid and, preferably, acyl halides of monoanhydrides of aromatic tricarboxylic acids such as naphthalene-1,2,4-, 1,2,5-, 1,2,6-, 1,2,7-, 1,4,5-, 1,3,8- and 2,3,6-tricarboxylic acids and, especially, trimellitic acid. The acyl halides may be obtained from the tricarboxylic acid monoanhydrides by conventional reactions, for example by heating with thionyl chloride. Suitable hydroxyalkyl acrylates and methacyrlates include 2-hydroxyethyl acrylate, 2-hydroxypropyl acrylate, 3-hydroxypropyl acrylate, hydroxybutyl acrylates and the corresponding methacrylates.

Especially preferred diacrylic monocarboxylic acids are reaction products of 2-hydroxyethyl acrylate or methacrylate with the acid chloride of trimellitic anhydride, that is acids of formula III where $R^4$ denotes a benzene-1,2,4-triyl group and $R^5$ denotes an ethylene group.

Preferred diacrylic dicarboxylic acids are those of formula

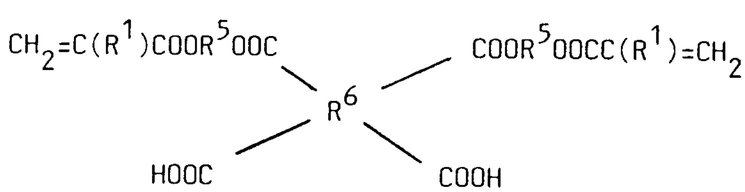

VI

where

$R^1$ and $R^5$ are as defined in formula III, and

$R^6$ denotes a tetravalent organic residue of a tetracarboxylic acid after removal of four carboxyl groups, generally of 5 to 30 carbon atoms, preferably a cycloaliphatic or aromatic residue of 5 to 20 carbon atoms.

The diacrylic dicarboxylic acids are usually reaction products of a dianhydride of a polycarboxylic acid, e.g. of formula

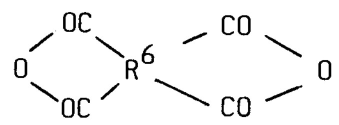

VII

with a hydroxyalkyl acyrlate or methacrylate, e.g. of formula V.

Suitable dianhydrides from which such reaction products may be derived include those of cycloaliphatic tetracarboxylic acids such as cyclopentane-1,2,4,5-tetracarboxylic acid and, preferably, aromatic tetracarboxylic acids such as benzophenone-3,3′,4,4′-tetracarboxylic acid, pyromellitic acid and naphthalene-2,3,6,7-tetracarboxylic acid. Suitable hydroxyalkyl acrylates and methacrylates include 2-hydroxyethyl acrylate, 2-hydroxypropyl acrylate, 3-hydroxypropyl acrylate, hydroxybutyl acrylates and the corresponding methacrylates.

Especially preferred diacrylic dicarboxylic acids are reaction products of benzophenone-3,3′,4,4′-tetracarboxylic acid dianhydride with 2-hydroxyethyl acrylate or methacrylate, that is acids of formula VI where $R^5$ denotes an ethylene group and $R^6$ denotes a benzophenone-3,3′,4,4′-tetrayl group.

The reaction of a compound of formula IV or VII with a compound of formula V may be carried out using conventional procedures for anhydride-hydroxyl reactions. Conveniently the reactants are heated together, optionally in an inert solvent, in the presence of a catalyst such as a tertiary amine or a quaternary ammonium salt.

When, as in preferred embodiments of the invention, a monoacrylic compound is used as the polymerisable carboxylic acid, the adhesive composition preferably also contains a polyfunctional material, having, on average, more than one polymerisable acrylic group per molecule. Suitable such polyfunctional materials include acrylates and methacrylates of polyhydric alcohols such as ethylene glycol diacrylate, triethylene glycol diacrylate, dipropylene glycol diacrylate, tripropylene glycol diacrylate, butanediol-1,4-diacrylate, pentamethylene glycol diacrylate, neopentyl glycol diacrylate, hexamethylene glycol diacrylate, 1,1,1-trimethylolpropane triacrylate, pentaerythritol tetraacrylate and corresponding methacrylates. Other suitable polyfunctional materials are reaction products of hydroxyalkyl acrylates or methacrylates with isocyanate-terminated prepolymers derived from polyols and polyisocyanates.

Preferred polyfunctional materials are esters of epoxide resins with carboxylic acids having a polymerisable acrylic group. Such acids include acrylic acid, methacrylic acid, dimers of acrylic acid and methacrylic acid, and adducts of hydroxyalkyl acrylates or methacrylates such as 2-hydroxyethyl methacrylate or 2-hydroxypropyl acrylate with polycarboxylic acid anhydrides such as those hereinbefore mentioned. Esters of epoxide resins with acrylic or methacrylic acid are preferred.

When a diacrylic compound is used as the polymerisable carboxylic acid, the adhesive composition may contain, as an additional component to achieve the desired viscosity, another acrylic material which is a polyfunctional material having, on average, more than one polymerisable acrylic group per molecule as hereinbefore described.

Epoxide resins from which the esters may be derived include those having at least two glycidyl groups attached to an atom or atoms of oxygen, nitrogen or sulphur, and cycloaliphatic epoxide resins in which the epoxide group is part of the ring system. The polyglycidyl compounds may be polyglycidyl esters of aliphatic, cycloaliphatic or aromatic polycarboxylic acids such as adipic, succinic, hexahydrophthalic and phthalic acids, and poly-(N-glycidyl) compounds, for example poly(N-glycidyl) derivatives of aromatic amines such as aniline and bis(4-amino-phenyl methane and hydantoins such as 5,5-dimethylhydantoin. Preferred epoxide resins are polyglycidyl ethers, which may have been advanced, of polyhydric alcohols or phenols, including polyglycidyl ethers of the polyhydric alcohols and polyhydric phenols mentioned above. Preferred polyglycidyl ethers are diglycidyl ethers, which may have been advanced, of dihydric alcohols and phenols, such as 1,4-butanediol, polyoxyalkylene glycols and bisphenols, and polyglycidyl ethers of phenolaldehyde novolaks. Especially preferred polyglycidyl ethers are diglycidyl ethers, which may have been advanced, of dihydric alcohols having from 2 to 60 carbon atoms, or of bis(4-hydroxyphenyl)methane, 2,2-bis(4-hydroxyphenyl)propane or 2,2-bis(3,5-dibromo-4-hydroxyphenyl)propane, or polyglycidyl ethers of novolaks derived from phenol and formaldehyde. The esters of epoxide resins may be prepared by conventional procedures, for example by reacting the carboxylic acid having a polymerisable acrylic group, preferably acrylic or methacrylic acid, with the epoxide resin in the presence of a tertiary amine, a transition metal salt of a saturated carboxylic acid or an onium salt. Preferably, the epoxide resin is also esterified with a saturated monocarboxylic acid having from 6 to 20 carbon atoms, preferably lauric acid, octanoic acid or nonanoic acid.

This esterification may be carried out before, simultaneously with or after the esterification with the carboxylic acid having an acrylic group. Thus particularly preferred adhesive compositions contain an ester of an epoxide resin with the carboxylic acid having a polymerisable acrylic group and an ester of the epoxide resin with the saturated monocarboyxlic acid having from 6 to 20 carbon atoms.

In adhesive compositions containing a mixture of a polymerisable carboxylic acid and a polyfunctional material, having, on average, more than one polymerisable acrylic group per molecule, the weight ratio of carboxylic acid to polyfunctional material is generally from 1:5 to 19:1, preferably from 1:1.5 to 10:1, and especially from 1:1 to 5:1.

The flexibility of the polymerised adhesive may be improved, where desired, by including in the adhesive composition a flexible polymer, preferably an elastomeric polymer. Flexibilising elastomeric polymers are well known in the adhesives art, including polymers of conjugated dienes such as butadiene and isoprene, which may be homopolymers or copolymers with other ethylenically unsaturated materials, particularly styrene, substituted styrenes and acrylic monomers such as acrylonitrile, alkyl acrylates and alkyl methacrylates. These diene polymers may have terminal functional groups such as amino, carboxyl or vinyl groups. Elastomeric polymers which have been found to be particularly suitable for use in the method of the invention are vinyl terminated butadiene-acrylonitrile copolymers, preferably those having a molecular weight of at least 500. The weight ratio of carboxylic acid to elastomeric polymer is generally from 1:3 to 19:1, preferably from 1:1.5 to 5:1 and especially from 1:1 to 2:1.

The adhesive composition may be liquid (including pastes) or solid, depending on the nature of its ingredients and their relative amounts. When the composition is liquid, it may be applied directly to one or both of the surfaces to be bonded. When it is solid, it may be applied, to one or both of the surfaces to be bonded, in solution in a volatile solvent and the solvent then evaporated before the surfaces to be bonded are brought together. A solid adhesive composition may alternatively be applied to one or both of the surfaces in molten form. In a further alternative, a solid adhesive composition may be used in the form of a preformed film. Such a film can be produced in a conventional manner. Thus it may be cast onto a release surface such as silicone-treated paper from a solution of the composition in a volatile solvent or may be formed without the use of solvents by subjecting the solid composition to heat and pressure under conditions which do not induce polymerisation. The film-forming properties of the adhesive composition can be improved by the inclusion of a film-forming polymer such as an acrylic homopolymer or copolymer, a phenoxy resin, a high molecular weight or advanced epoxide resin or, preferably, a polyurethane, particularly an isocyanate-terminated prepolymer derived from a bisphenol and a polyisocyanate and having a molecular weight from 400 to 10,000.

Polymerisation of the adhesive composition may be effected by subjecting it to ionising radiation such as electron beam or X-ray radiation. For such polymerisation, as is well understood, an initiator is not necessary although a free radical initiator can be included in the composition to accelerate polymerisation.

When it is desired to partially or completely polymerise the adhesive composition by subjection to photopolymerising radiation such as ultaviolet, laser beam or short wavelength visible radiation, a photopolymerisation initiator for acrylic groups is included in the composition. This can be any of the known initiators for the photopolymerisation of acrylic materials, used in a conventional amount, generally from 0.1 to 20%, preferably 1 to 10%, by weight of the polymerisable acrylic material. Thus the photopolymerisation initiator may be an aromatic carbonyl compound, for example a benzoin, a benzoin alkyl ether such as the isopropyl or n-butyl ether, an alpha-substituted acetophenone, for example a benzil ketal such as benzil dimethyl ketal, an alpha-haloacetophenone such as trichloromethyl p-tert.butylphenyl ketone, an alpha-aminoacetophenone such as dimethylaminomethyl phenyl ketone and morpholinomethyl phenyl ketone, a dialkoxyacetophenone such as diethoxyacetophenone, or an alpha-hydroxyacetophenone such as 1-hydroxycyclohexylphenyl ketone or a benzophenone such as benzophenone itself and bis(4-dimethylamino)-benzophenone; a metallocene, for example a titanium metallocene such as bis(pi-methylcyclopentadienyl)-bis(sigma-pentafluorophenyl) titanium (IV); a Group IVA organometallic compound, for example a stannane such as trimethyl benzyl stannane, tributyl benzyl stannane or dibutyl benzyl stannane, together with a photoreducible dye, typically methylene blue or rose bengal; a quinone, such as anthraquinone or camphorquinone, together with an amine having hydrogen attached to an aliphatic alpha carbon atom, preferably a tertiary amine such as bis(4-dimethylamino)benzophenone and triethanolamine; a thioxanthone, for example an alkyl- or halogen-substituted thioxanthone such as 2-isopropylthioxanthone or 2-chlorothioxanthone; an acyl phosphone oxide; or a mixture of two or more thereof.

Preferably, the photopolymerisation initiator is an alpha-substituted acetophenone, a thioxanthone,a metallocene or a mixture of two or more thereof. In particularly preferred embodiments, the initiator is a benzil dialkyl ketal, an alkyl-substituted thioxanthone or a mixture of two or more thereof.

The adhesive composition containing a photopolymerisation initiator may be polymerised by subjection

to photopolymerising radiation. When the composition also contains a free radical polymerisation initiator, it can be polymerised by subjecting it to photopolymerising radiation to effect partial polymerisation followed by free radical polymerisation to complete the polymerisation.

Photopolymerising radiation suitable for use in the method of the invention may be exclusively ultraviolet radiation or it may be radiation having wavelengths in both the ultraviolet and visible regions of the spectrum. Radiation having a wavelength of 200 to 800 nm, especially 200 to 500 nm, is preferred. The selection, from commercially available equipment, of a suitable radiation source emitting radiation within this wavelength range is a routine matter for those skilled in the art of photopolymerisation. Suitable sources include medium pressure mercury arc lamps and metal halide lamps. Suitable irradiation times may similarly be determined readily by those familiar with photopolymerisation techniques.

Radiation can be used to effect polymerisation of the adhesive composition only when at least one of the substrates to be bonded, or a significant part of at least one of the substrates, is transparent to the radiation to be used. This proviso does not impose much restriction on the use of ionising radiation since most materials are transparent to such radiation, but is more restrictive as far as the use of photopolymerising radiation is concerned.

When the adhesive composition is to be polymerised by means of free radicals, either directly or after subjection to photopolymerising radiation, it contains a free radical polymerisation initiator. This can be any of the known free radical-generating initiators conventionally used in vinyl polymerisation and is preferably an organic peroxide or azo compound. The initiators can be used in conventional amounts, generally from 0.01 to 15%, preferably 0.05 to 10%, by weight of the polymerisable material. Suitable organic peroxides include dialkyl peroxides such as tert. butyl peroxide and 2,2-bis(tert.butylperoxy)propane, diacyl peroxides such as benzoyl peroxide and acetyl peroxide, peresters such as tert.butyl perbenzoate and ter.butyl per-2-ethylhexanoate, perdicarbonates such as dicetyl peroxy dicarbonate and dicyclohexyl peroxy dicarbonate, ketone peroxides such as cyclohexanone peroxide and methylethylketone peroxide, and hydroperoxides such as cumene hydroperoxide and tert.butyl hydroperoxide. Suitable azo compounds include azo bis-(isobutyronitrile) and azo bis(2,4-dimethylvaleronitrile). Accelerators of free radical polymerisation, for example tertiary amines, ketimines, transition metal salts such as cobalt naphthenate and vanadium monobutyl phosphite and sulphimides, may be used together with the initiators.

As is well understood in the art of acrylic polymerisation, appropriate choice of free radical initiator and accelerator can give adhesive compositions which undergo free radical polymerisation under ambient conditions, although their polymerisation can be accelerated by heating. For such compositions, subjection to polymerising conditions requires simply allowing them to polymerise under ambient conditions after confinement between the surfaces to be bonded. Preferably in accordance with the present invention, free radical polymerisation is effected by heating, which can be to only moderately elevated temperatures. Suitable temperatures are generally from 30 to 150 ° C, preferably from 80 to 130 ° C.

The adhesive composition may also contain conventional additives, for example, polymerisation inhibitors such as hydroquinone and 2,6-di-tert.butyl-4-methylphenol and fillers to formulate the composition as a paste. Of course, when the composition is to be polymerised by exposure to radiation, the filler should be sufficiently transparent to the radiation used that it does not prevent polymeristion. Selection of a suitable filler is a routine matter for those skilled in the art of radiation polymerisation.

The method of the invention is useful in bonding two gelatinous surfaces together or in bonding a gelatinous surface to a surface of a different material such as metal, glass, cellulosic material, lignocellulosic material or natural or synthetic polymeric material. The gelatinous surface may be the surface of a gelatin layer formed by evaporation of water from an aqueous gelatin emulsion deposited on a support such as a polyester film.

As already indicated, the method of the invention is suitable for bonding holograms to various substrates. A hologram usually comprises at least one layer of gelatin on a conventional photographic support film, the gelatin layer having a holographic image formed therein. The support film may be, for example, of a polyester, polycarbonate or cellulose triacetate material. The hologram can be produced by coating the support film on one or both sides with an optically sensitised aqueous silver halide gelatinous emulsion, evaporating the water and holographically exposing the dried gelatinous layer. In bonding a hologram having a gelatinous image-bearing layer to another surface, a gelatinous surface of the hologram is bonded to a surface of, for example, metal, glass or, particularly, cellulosic, lignocellulosic or natural or synthetic polymeric material.

In view of its suitability for bonding gelatinous surfaces to cellulosic, lignocellulosic or polymeric materials, the method of the invention is particularly suitable for bonding holograms to security articles such as banknotes, passport paper and, especially, security cards such as identity cards or credit cards. Such cards may contain a data-carrying sheet of paper, card or polymeric material encased, usually by a

laminating process, within a protective coating of a plastics material. A hologram is usually bonded to the data-carrying sheet before the protective outer coating is applied.

The invention is illustrated by the following Examples in which parts and percentages are by weight unless stated otherwise.

Resins and polymerisable carboxylic acids used in the Examples are prepared as follows:

Resin I

A mixture of diglycidyl ether of bisphenol A having an epoxide content of 5.2 equivalents/kg (200 parts) and 2,6-di-tert.butyl-4-methylphenol (0.2 part) is heated to 110 °C. While maintaining this temperature there is added over a period of 2 hours a mixture of methacrylic acid (82 parts), lauric acid (9.5 parts), chromium III trisoctanoate (0.2 part; 5% solution in ligroin) and 2,6-di-tert.butyl 4-methylphenol (0.6 part). After heating for a further 9 hours at 110 °C, the epoxide content is reduced to a negligible value.

Resin II

A mixture of a diglycidyl ether of bisphenol A having an epoxide content of 5.2 equivalents/kg (400 parts) and 2,6-di-tert.butyl-4-methylphenol (0.4 part) is heated to 110 °C. While maintaining this temperature there is added over a period of 2.5 hours a mixture of methacrylic acid (164 parts), nonanoic acid (15 parts), chroimium III trisoctanoate (0.4 part; 5% solution in ligroin) and 2,6-di-tert.butyl-4-methylphenol (1.2 parts). After heating for a further 3 hours at 110 °C, the epoxide content is 0.36 equivalent/kg.

Elastomer I used in the Examples designates a vinyl terminated butadiene-acrylonitrile copolymer having a molecular weight of 1300 which is available under the trade name HYCAR Reactive Liquid Polymer Type 1300 X22 from The B.F. Goodrich Co., 6100 Oak Tree Boulevard, Cleveland, Ohio 44131, U.S.A.

Carboxylic Acid I

A mixture of benzophenone-3,3′,4,4′-tetracarboxylic acid dianhydride (200 parts), 2-hydroxyethyl acrylate (288.5 parts), tetramethylammonium chloride (0.48 part) and 2,6-di-tert.butyl-4-methylphenol (1.95 parts) is heated at 80 °C for 4 hours and then cooled to ambient temperature. The infrared spectrum shows no anhydride groups present.

Carboxylic Acid II

A mixture of trimellitic anhydride (115.2 parts), thionyl chloride (142.8 parts) and xylene (1.5 litres) is heated slowly over 2 hours to reflux temperature. After heating under reflux for a further 3¼ hours, no more gas can be seen evolving. The xylene is evaporated under vacuum, final traces being removed on a rotary evaporator. On cooling a solid (119 parts) melting at 62-66 °C is obtained - the acid chloride of trimellitic anhydride.

Part of the above solid (50 parts) is added gradually over 1 hour to a mixture of 2-hydroxyethyl methacrylate (61.7 parts), 2,6-di-tert.butyl-4-methylphenol (0.4 part) and tetramethylammonium chloride (0.1 part) heated to 80 °C. The heating at 80 °C is continued for a further 3 hours, by which time the anhydride content is negligible.

EXAMPLE 1

An adhesive consisting of 2-carboxyethyl acrylate (100 parts) and benzil dimethyl ketal (3 parts) is coated in a layer 5 to 10 micrometres thick onto printed stiff credit card paper over an area where a hologram is to be bonded. A hologram, consisting of an image-bearing gelatinous layer on a transparent photographic support, is applied to the adhesive layer with the gelatinous surface in contact with the adhesive. Hand pressure is applied to the hologram to remove any air trapped between the hologram and the adhesive layer. The resulting assembly is then subjected to photopolymerising radiation by passing it under a 80w/cm medium pressure mercury arc lamp at a distance of 12.5 cm 5 times on a conveyor at a speed of 0.3m per second. A totally secure bond is formed between the hologram and the paper. On attempting to separate the hologram from the paper, both the hologram and the paper are destroyed.

EXAMPLE 2

The procedure of Example 1 is repeated, replacing the adhesive used in that Example with a mixture of acrylic acid (100 parts) and benzil dimethyl ketal (3 parts). A totally secure bond is formed, so that on attempting to remove the hologram from the paper, both the hologram and the paper are destroyed.

EXAMPLE 3

The procedure of Example 1 is repeated, replacing the adhesive used in that Example with a mixture of acrylic acid (40 parts), Resin I (30 parts), Elastomer I (30 parts) and benzil dimethyl ketal (3 parts). A totally secure bond is formed, so that on attempting to remove the hologram from the paper, both the hologram and the paper are destroyed.

EXAMPLE 4

The procedure of Example 1 is repeated, replacing the adhesive used in that Example by a mixture of 2-carboxyethyl acrylate (51 parts), Resin I (23 parts), Elastomer I (23 parts) and benzil dimethyl ketal (3 parts). A totally secure bond is formed, so that on attempting to separate the hologram from the paper, both the hologram and the paper are destroyed.

EXAMPLE 5

The procedure of Example 1 is repeated, replacing the adhesive used in that Example by a mixture of 2-carboxyethyl acrylate (77 parts), Resin I (20 parts) and benzil dimethyl ketal (3 parts). A totally secure bond is formed, so that on attempting to remove the hologram from the paper, both the hologram and the paper are destroyed.

EXAMPLE 6

The procedure of Example 1 is repeated, replacing the adhesive used in that Example by a mixture of acrylic acid (37 parts), Resin I (30 parts), Elastomer I (30 parts) and benzil dimethyl ketal (3 parts). A totally secure bond is formed, so that on attempting to separate the hologram from the paper, both the hologram and the paper are destroyed.

EXAMPLE 7

An adhesive consisting of a mixture of 2-carboxyethyl acrylate (100 parts), Resin II (100 parts) and methyl ethyl ketone peroxide (0.2 part) is coated in layer 5 to 10 micrometres thick onto printed stiff credit card paper. A hologram, consisting of an image-bearing gelatinous layer on a transparent photographic support, is applied to the adhesive layer with the gelatinous surface in contact with the adhesive. The resulting assembly is placed in a vacuum chamber which is evacuated to remove any air trapped between the hologram and the adhesive layer. The assembly is then heated for 30 minutes at 120°C to polymerise the adhesive. A totally secure bond is formed between the hologram and the paper, an attempt to separate the hologram from the paper resulting in the destruction of both hologram and paper.

EXAMPLE 8

The procedure of Example 7 is repeated using the same adhesive to which is added cobalt naphthenate (0.04 part). A totally secure bond is again formed, so that on attempting to separate the hologram from the paper, both the hologram and the paper are destroyed.

EXAMPLE 9

The procedure of Example 8 is repeated using the same adhesive to which is added benzil dimethyl ketal (0.6 part), but instead of heating the assembly directly after evacuation it is first subjected under vacuum to photopolymerising radiation from a 5000w metal halide lamp at a distance of 75 cm. for 30 seconds. The assembly is then heated for 30 minutes at 110°C to form a totally secure bond between the hologram and the paper. On attempting to separate the hologram from the paper, both are destroyed.

EXAMPLE 10

An adhesive consisting of a mixture of Carboxylic Acid I (100 parts), Resin II (20 parts) and benzil dimethyl ketal (3 parts) is coated in a layer 3-5 micrometres thick onto printed stiff credit card paper. A hologram, consisting of an image-bearing gelatinous layer on a transparent photographic support, is applied as described in Exmaple 1. The resulting assembly is subjected to photopolymerising radiation by placing it under a 5000w metal halide lamp at a distance of 75 cm for 10 seconds. A totally secure bond is obtained, so that on attempting to separate the hologram from the paper, both are destroyed.

EXAMPLE 11

The procedure of Example 10 is repeated, replacing the adhesive used in that example with a mixture of Carboxylic Acid II (100 parts), Resin II (25 parts) and benzil dimethyl ketal (4 parts). Again, a totally secure bond is formed, so that on attempting to separate the hologram from the paper, both are destroyed.

**Claims**

**1.** A method of bonding together two surfaces, at least one of which is gelatinous, comprising
(i) sandwiching between, and in contact with, the surfaces an adhesive composition comprising a polymerisable carboxylic acid having at least one polymerisable acrylic group, and
(ii) subjecting the adhesive composition to polymerising conditions therefor until it is polymerised.

**2.** A method according to claim 1, in which the carboxylic acid is a reaction product of a polycarboxylic acid anhydride with a compound having a hydroxyl group and at least one polymerisable acrylic group.

**3.** A method according to claim 1 or 2, in which the carboxylic acid is a monoacrylic compound having from 3 to 30 carbon atoms.

**4.** A method according to claim 3, in which the carboxylic acid is of formula

$$CH_2=C(R^1)\text{-}COOR^2 \qquad I$$

where
$R^1$ denotes a hydrogen atom or a methyl group,
$R^2$ denotes a hydrogen atom or a group of formula $-R^3$-COOH, and
$R^3$ denotes an alkylene group having 1 to 4 carbon atoms or a group of formula

$$-(CH_2\text{-}CH(R^1)COO)_nCH_2CH(R^1)\text{-} \qquad II$$

where n denotes an integer of from 1 to 6.

**5.** A method according to claim 1 or 2, in which the carboxylic acid has 2 acrylic groups and 1 or 2 carboxyl groups.

**6.** A method according to any of claims 3 to 5, in which the adhesive composition also contains another acrylic material which is a polyfunctional material having, on average, more than one polymerisable acrylic group per molecule.

**7.** A method according to any of the preceding claims, in which the adhesive composition also contains an elastomeric polymer.

**8.** A method according to any of the preceding claims, in which the adhesive composition also contains a film-forming polymer.

**9.** A method according to any of claims 1 to 8, in which the adhesive composition also contains a photopolymerisation initiator for the acrylic group and is polymerised by subjection to photopolymerising radiation.

**10.** A method according to any of claims 1 to 8, in which the adhesive composition contains a photopolymerisation initiator for the acrylic group and a free radical polymerisation initiator and is

polymerised by subjection to photopolymerising radiation followed by free radical polymerisation.

**11.** A method according to any of claims 1 to 8, in which the adhesive composition also contains a free radical polymerisation initiator and is polymerised by free radical polymerisation.

**12.** A method according to any of the preceding claims, in which the surfaces to be bonded are a gelatinous surface of a hologram having a gelatinous image-bearing layer and a surface of a cellulosic, lignocellulosic or natural or synthetic polymeric material.

**13.** A security card comprising two components, at least one of which has a gelatinous surface, bonded together by a method according to any of the preceding claims.

**Revendications**

**1.** Une méthode pour lier (coller) l'une à l'autre deux surfaces dont l'une au moins est une surface gélatineuse, méthode selon laquelle :

(1) on dispose entre les deux surfaces, en contact avec elles, une composition adhésive comprenant un acide carboxylique polymérisable avec au moins un groupe acrylique polymérisable, et

(2) on soumet cette composition à des conditions de polymérisation appropriées jusqu'à ce qu'elle soit polymérisée.

**2.** Une méthode selon la revendication 1 dans laquelle l'acide carboxylique est un produit de réaction d'un anhydride d'acide polycarboxylique avec un composé ayant un groupe hydroxylique et au moins un groupe acrylique pouvant donner lieu à une polymérisation.

**3.** Une méthode selon la revendication 1 ou 2 dans laquelle l'acide carboxylique est un composé monoacrylique ayant de 3 à 30 atomes de carbone.

**4.** Une méthode selon la revendication 3 dans laquelle l'acide carboxylique est un acide de formule

$CH_2 = C(R^1)\text{-}COOR^2$ (I)

dans laquelle

$R^1$ désigne un atome d'hydrogène ou le groupe méthyle et

$R^2$ un atome d'hydrogène ou un groupe $-R^3\text{-}COOH$,

$R^3$ étant un alkylène avec de 1 à 4 atomes de carbone ou un groupe de formule

$-(CH_2CH(R^1)COO)_nCH_2(R^1)-$ (II)

n étant un entier de 1 à 6.

**5.** Une méthode selon la revendication 1 ou 2 dans laquelle l'acide carboxylique a deux groupes acryliques et un ou deux groupes carboxyliques.

**6.** Une méthode selon l'une quelconque des revendications 3 à 5, dans laquelle la composition adhésive contient également une autre matière acrylique qui est une matière polyfonctionnelle ayant en moyenne par molécule plus d'un groupe acrylique pouvant donner lieu à une polymérisation.

**7.** Une méthode selon l'une quelconque des revendications précédentes, dans laquelle la composition adhésive contient également un polymère élastomère.

**8.** Une méthode selon l'une quelconque des revendications précédentes, dans laquelle la composition adhésive contient aussi un polymère filmogène.

**9.** Une méthode selon l'une quelconque des revendications 1 à 8, dans laquelle la composition adhésive contient également un inducteur de photopolymérisation pour le groupe acrylique et on la polymérise en la soumettant à un rayonnement photopolymérisant.

**10.** Une méthode selon l'une quelconque des revendications 1 à 8, dans laquelle la composition adhésive contient également un inducteur de photopolymérisation pour le groupe acrylique et un inducteur de photopolymérisation radicalaire et on la polymérise en la soumettant à un rayonnement photopolymérisant puis à une polymérisation radicalaire.

**11.** Une méthode selon l'une quelconque des revendications 1 à 8, dans laquelle la composition adhésive contient également un inducteur de photopolymérisation radicalaire et elle est polymérisée par une polymérisation radicalaire.

**12.** Une méthode selon l'une quelconque des revendications précédentes dans laquelle les surfaces à coller l'une à l'autre sont une surface gélatineuse d'un hologramme ayant une couche gélatineuse qui porte une image et une surface d'une matière cellulosique, lignocellulosique ou d'une matière polymère d'origine naturelle ou synthétique.

**13.** Une carte de sécurité comportant deux composants dont l'un au moins a une surface gélatineuse, qui sont collés l'un à l'autre par une méthode selon l'une quelconque des revendications précédentes.

**Patentansprüche**

**1.** Verfahren zum Verkleben zweier Flächen, von denen mindestens eine gelatineartig ist, das darin besteht, daß man
(i) eine Klebemasse aus einer polymerisierbaren Carbonsäure mit mindestens einer polymerisierbaren Acrylgruppe zwischen den Flächen und diese berührend einlagert, und
(ii) die Klebemasse bis zu deren Polymerisierung Polymerisationsbedingungen aussetzt.

**2.** Verfahren nach Anspruch 1, worin es sich bei der Carbonsäure um ein Umsetzungsprodukt aus einem Polycarbonsäureanhydrid und einer Verbindung mit einer Hydroxylgruppe und mindestens einer polymerisierbaren Acrylgruppe handelt.

**3.** Verfahren nach Anspruch 1 oder 2, worin es sich bei der Carbonsäure um eine Monoacrylverbindung mit 3 bis 30 Kohlenstoffatomen handelt.

**4.** Verfahren nach Anspruch 3, worin die Carbonsäure die Formel

$$CH_2 = C(R^1)\text{-}COOR^2 \qquad I$$

aufweist, wobei
$R^1$ ein Wasserstoffatom oder eine Methylgruppe,
$R^2$ ein Wasserstoffatom oder eine Gruppe der Formel $-R^3-COOH$,
und
$R^3$ eine Alkylengruppe mit 1 bis 4 Kohlenstoffatomen oder eine Gruppe der Formel

$$-(CH_2\text{-}CH(R^1)COO)_nCH_2CH(R^1)\text{-} \qquad II$$

bedeuten, wobei n eine ganze Zahl von 1 bis 6 darstellt.

**5.** Verfahren nach Anspruch 1 oder 2, worin die Carbonsäure 2 Acrylgruppen und 1 oder 2 Carboxylgruppen aufweist.

**6.** Verfahren nach einem der Ansprüche 3 bis 5, worin die Klebemasse noch ein weiteres Acrylmaterial enthält, bei dem es sich um ein polyfunktionelles Material mit durchschnittlich mehr als einer polymerisierbaren Acrylgruppe pro Molekül handelt.

**7.** Verfahren nach einem der vorhergehenden Ansprüche, worin die Klebemasse weiterhin ein Elastomer enthält.

**8.** Verfahren nach einem der vorhergehenden Ansprüche, worin die Klebemasse weiterhin ein filmbildendes Polymer enthält.

**9.** Verfahren nach einem der Ansprüche 1 bis 8, worin die Klebemasse ebenfalls einen Photopolymerisationsinitiator für die Acrylgruppe enthält und durch Einwirkung von photopolymerisierender Strahlung polymerisiert wird.

**10.** Verfahren nach einem der Ansprüche 1 bis 8, worin die Klebemasse einen Photopolymerisationsinitiator für die Acrylgruppe und einen Radikalpolymerisationsinitiator enthält und durch Einwirkung von photopolymerisierender Strahlung und anschließend durch Radikalpolymerisiation polymerisiert wird.

**11.** Verfahren nach einem der Ansprüche 1 bis 8, worin die Klebemasse ebenfalls einen Radikalpolymerisationsinitiator enthält und durch Radikalpolymerisation polymerisiert wird.

**12.** Verfahren nach einem der vorhergehenden Ansprüche, worin es sich bei den zu verklebenden Flächen um eine gelatineartige, eine gelatineartige Bildträgerschicht aufweisende Hologrammfläche und um eine Fläche aus Zellulose-, Lignozellulose-, oder natürlichem oder synthetischem polymeren Material handelt.

**13.** Sicherheitskarte aus zwei Komponenten, von denen mindestens eine eine nach einem Verfahren gemäß einem der vorhergehenden Ansprüche verklebte, gelatineartige Fläche aufweist.